# EUROPÄISCHE PATENTSCHRIFT

(11) **EP 0 790 028 B1**
(45) Veröffentlichungstag und Bekanntmachung des Hinweises auf die Patenterteilung: **28.01.2004**
(21) Anmeldenummer: 97102022.7
(22) Anmeldetag: 08.02.1997
(51) Int. Cl.: A47J 47/18

(54) **Eimer aus Kunststoff für Wischwasser**
Plastic scrubbing pail
Seau de nettoyage en plastique

(30) Priorität: 13.02.1996 DE 29602476 U
(43) Veröffentlichungstag der Anmeldung: 20.08.1997
(73) Patentinhaber: CORONET-Werke Gesellschaft mit beschränkter Haftung, 69483 Wald-Michelbach (DE)
(72) Erfinder: Weihrauch, Georg, 69483 Wald-Michelbach (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- DE-A- 1 700 908
- US-A- 2 392 208
- US-A- 2 885 107
- US-A- 3 124 393
- US-A- 3 739 976
- US-A- 4 757 636

## Beschreibung

Die Erfindung betrifft einen Putzeimer, vorzugsweise aus Kunststoff, für Wischwasser mit einem Boden, einer im wesentlichen aufrechten Wandung und einem im Bereich des Öffnungsrandes gelagerten Tragbügel.

Putzeimer bestehen heute fast ausschließlich aus Kunststoff und sind durch Spritzen, Blasen oder Ziehen hergestellt. Sie weisen entweder die Form eines Kegelstumpfs auf, dessen kleinere Basis den Boden und dessen größere Basis den Öffnungsrand bildet. Der Öffnungsrand ist im allgemeinen durch entsprechende Formgebung ausgesteift, beispielsweise durch einen nach außen gekehrten Bördel. Gleiches gilt für Putzeimer mit im wesentlichen rechteckiger Form. Im Bereich des Öffnungsrandes ist der Tragbügel gelagert, wobei die Lager selbst wiederum durch Materialverstärkungen gebildet werden.

Solche Putzeimer dienen zur Aufnahme von Wischwasser, zum Reinigen von Böden oder Wänden (soweit abwaschbar beschichtet), Fenstern, Türen, aber auch zum Feuchtreinigen von jeglichem Mobiliar (Arbeitsflächen etc.). Die Reinigung insbesondere von Böden, Wänden, Fenstern und Türen erfolgt vorzugsweise mit warmem bis heißem Wasser, um hartnäckigen, vor allem fett- und zuckerhaltigen Schmutz zu lösen. Aus Umweltschutzgründen kommt heute der Verwendung von Wischwasser mit erhöhter Temperatur besondere Bedeutung zu, da hierdurch die Zugabe chemischer Reinigungsmittel völlig oder zumindest sehr weitgehend vermieden werden kann. Soweit Reinigungsmittel eingesetzt werden, sind sie zudem bei erhöhter Temperatur im allgemeinen wirksamer.

Der Erfindung liegt die Aufgabe zugrunde, einen Putzeimer so auszubilden, daß die Wirksamkeit des Wischwassers und/oder der zugesetzten Reinigungsmittel verbessert wird.

Diese Aufgabe wird grundsätzlich dadurch gelöst, daß wenigstens die Wandung des Putzeimers zumindest auf dem größten Teil der Höhe des Putzeimers thermisch isolierend ausgebildet ist.

Die Erfindung geht von der an sich bekannten Feststellung aus, daß sich heißes Wischwasser relativ schnell abkühlt, und zwar einerseits durch unmittelbare Wärmeleitung und Abstrahlung an die Umgebung, zum anderen durch das wiederkehrende Eintauchen und Auswringen des während der Reinigungsarbeit erkaltenden Putztuchs, Reinigungstuchs oder dergleichen. Die Erfindung bringt den Vorteil, daß Wärmeverluste durch Wärmeleitung und Abstrahlung durch die Wandung des Eimers weitestgehend unterbunden werden.

Diese Wirkung läßt sich noch dadurch steigern, daß auch der Boden thermisch isolierend ausgebildet ist. Die Wärmeverluste werden damit auf die Wärmeabstrahlung an der freien Oberfläche des Wischwassers beschränkt.

Es sind zwar Behältnisse verschiedener Art mit Isolierwirkung bekannt, z. B. US 2 781 937, jedoch ist bisher im Haushaltsbereich nicht in Erwägung gezogen worden, heißes bzw. warmes Wischwasser oder die zu ihrer Aufnahme dienenden Eimer thermisch zu isolieren. Die US 2 885 107 beschreibt einen derartigen Isolierbehälter zur Aufbewahrung von Lebensmitteln oder Gewürzen, insbesondere als Kühltasche für Picknicks.

Für die thermisch isolierende Ausbildung können verschiedene Ausführungen vorgesehen sein, z. B. US-A-3 739 976. So können die Wandung und/oder der Boden im thermisch isolierten Bereich aus wenigstens zwei Schichten gebildet sein, von denen eine oder zwischen denen eine weitere Schicht ein thermischer Isolator ist. Beispielsweise können die Wandung und/oder der Boden als Doppelwand mit thermisch isolierendem Zwischenraum ausgebildet sein.

Der Zwischenraum kann lediglich luftgefüllt oder aber ausgeschäumt sein. Die Doppelwandigkeit läßt sich durch entsprechende Herstellungstechnik, z. B. im Blasverfahren, verwirklichen. Sie kann aber auch durch einen Einsatz in Form eines zweiten kleineren Behältnisses gebildet sein, wobei Eimer und Einsatz miteinander verschweißt, verklebt oder in anderer Weise stoffschlüssig verbunden sind. Der Einsatz kann aber auch in einfacher Weise mechanisch fixiert werden, z. B. durch entsprechende Rastverbindungen oder dergleichen. Schließlich kann der Einsatz ein einfacher, gegebenenfalls auch in Anpassung an alle Eimer geformter Folienbeutel sein, der über einen oberen Distanzring oder an der Innenseite des Eimers verteilte Distanzstücke auf Abstand von der Wandung gehalten ist. Statt der doppelwandigen Ausbildung mit Zwischenraum kann auch vorgesehen sein, daß die Wandung und ggf. der Boden innenseitig und/oder außenseitig mit einer Schicht aus einem Kunststoffschaum versehen sind, die durch ausschäumen oder umschäumen erhalten werden kann.

Statt dessen kann der Putzeimer auch einteilig ausgebildet sein, indem seine Wandung und ggf. sein Boden aus einem geschäumten Kunststoff bestehen.

In beiden vorgenannten Fällen ist es von Vorteil, wenn der Kunststoffschaum ein Integralschaum ist, oberflächig also geschlossen ist.

Es kann auch ein die Oberfläche des Schaumstoffs an der Innenseite des Putzeimers abdeckender und an dessen Öffnungsrand fixierter Folienbeutel vorgesehen sein.

In bevorzugter Ausführung ist vorgesehen, daß der Innenraum des Putzeimers durch eine Zwischenwand in zwei Räume - einen Wischwasserraum und einen Schmutzwasserraum - unterteilt ist, wie dies bei normalen Putzeimern (DE-GM-17 00 908) bekannt ist. Hierdurch wird vermieden, daß das beim Auswringen anfallende, kalte Schmutzwasser in das warme Wischwasser gelangt und dieses abkühlt. Durch die erfindungsgemäß vorgesehene thermische Isolierung wird das Wischwasser auch vor Wärmeverlusten durch Wärmeableitung oder -strahlung über die Eimerwände geschützt.

Dabei brauchen nur die den Wischwasserraum begrenzenden Wände thermisch isolierend ausgebildet sein. Schließlich kann auch noch ein thermisch isolierender Deckel vorgesehen sein.

Nachstehend ist die Erfindung anhand von in der Zeichnung wiedergegebenen Ausführungsbeispielen beschrieben. In der Zeichnung zeigen:
- Fig. 1:: Einen schematischen Längsschnitt eines Putzeimers in doppelwandiger Ausführung;
- Fig. 2:: einen der Figur 1 entsprechenden Längsschnitt eines Putzeimers mit innerer Ausschäumung und
- Fig. 3:: einen Längsschnitt einer weiteren Ausführungsform mit Wischwasser- und Schmutzwasserraum.

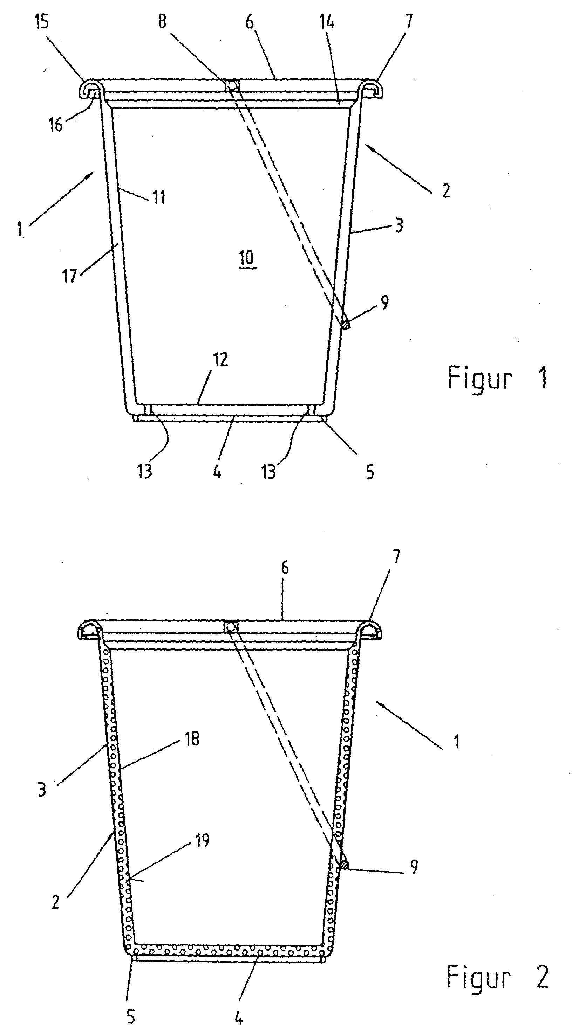

Der in Fig. 1 dargestellte Putzeimer 1 zur Aufnahme von Wischwasser besteht aus einem herkömmlichen Eimer 2 aus Kunststoff, z. B. PE, dessen Wandung 3 sich schwach konisch nach unten zu einem Böden 4 verjüngt. Der Boden 4 weist einen Standrand 5 auf. Die Wandung 3 ist im Bereich der Öffnung 6 zu einem Bördel 7 nach außen umgeformt, ferner sind im Bereich des Öffnungsrandes 6 an diametral gegenüberliegenden Stellen Lager 8 für einen Tragbügel 9 angeordnet.

Der Putzeimer 1 ist thermisch isolierend ausgebildet. Zu diesem Zweck ist ein eimerförmiger Einsatz 10 vorgesehen, dessen Wandung 11 parallel zur Wandung des Eimers 3 mit Abstand angeordnet ist. Ebenso weist der Boden 12 des Einsatzes 10 einen Abstand vom Boden 4 des Eimers 3 auf. Der Einsatz 10 kann mit einzelnen Standfüßen oder einem umlaufenden Standrand 13 auf der Innenseite des Bodens 4 aufstehen. Der Einsatz 10 ist mit dem Eimer 3 verrastet. Zu diesem Zweck erweitert sich der Einsatz 10 im Bereich 14 bis zur Anlage an der Innenseite der Wandung 3 bzw. an dem Bördel 7 und übergreift diesen gleichfalls mit einem nach außen gebogenen Bördel 15, an den weiterhin eine nach innen und oben abgebogene Nase bzw. Leiste 16 anschließt. Mit dem Bördel 15 und der Nase 16 läßt sich der Einsatz 10 nach Einfügen in den Eimer 2 an dessen Bördel 7 verrasten. Die thermische Isolationswirkung ergibt sich durch den luftgefüllten Zwischenraum 17 zwischen den Wandungen 3 und 11 bzw. den Böden 4 und 12.

Statt der in Fig. 1 gezeigten Ausführung können der Eimer 2 und der Einsatz 10 auch einteilig ausgebildet sein, indem sie beispielsweise im Blasverfahren hergestellt werden. Die Isolierwirkung kann ferner dadurch erreicht werden, daß der Zwischenraum 17 mit einem anderen isolierenden Material gefüllt oder ausgeschäumt ist.

Bei dem Ausführungsbeispiel gemäß Fig. 2 besteht der Putzeimer 1 wiederum aus einem üblichen Eimer 2 mit einer konischen Wandung 3, einem Boden 4 und einem Standrand 5 sowie einem im Bereich der Öffnung 6 vorgesehenen Bördel 7. Die thermische Isolation ergibt sich bei diesem Ausführungsbeispiel dadurch, daß der Eimer 2 innenseitig in einer gewissen Stärke ausgeschäumt ist, so daß sich eine isolierende Schicht 18, z. B. aus einem Kunststoffschaum, bildet. Dabei handelt es sich vorzugsweise um einen Integralschaum, der an seiner freien Oberfläche 19 eine geschlossene, wasserdichte Haut aufweist. Statt dessen oder zusätzlich kann auch ein Folienbeutel am Öffnungsrand eingehängt sein. Die Schicht 18 kann auch inhomogen aufgeschäumt sein, also beispielsweise im Kernbereich eine größere Porosität aufweisen als zur freien Oberfläche hin, wodurch die Stabilität der Innenseite des Putzeimers 1 verbessert wird.

Statt dessen oder zusätzlich kann der Eimer 2 auch an seiner Außenseite umschäumt sein, wie es auch möglich ist, den gesamten Putzeimer 1 aus einem Kunststoffschaum, insbesondere einem Integralschaum, auszubilden, wobei wiederum im Kernbereich eine stärkere Aufschäumung als in den Randbereichen vorgesehen ist, um an der Innen- und Außenseite eine stabile Außenhaut zu erhalten. Ein solcher inhomogener Schaum läßt sich dadurch verwirklichen, daß das polymere Ausgangsmaterial in mehreren Schichten in die Form eingebracht wird und in den verschiedenen Schichten ein unterschiedlicher Gehalt an Treibmittel vorgesehen ist.

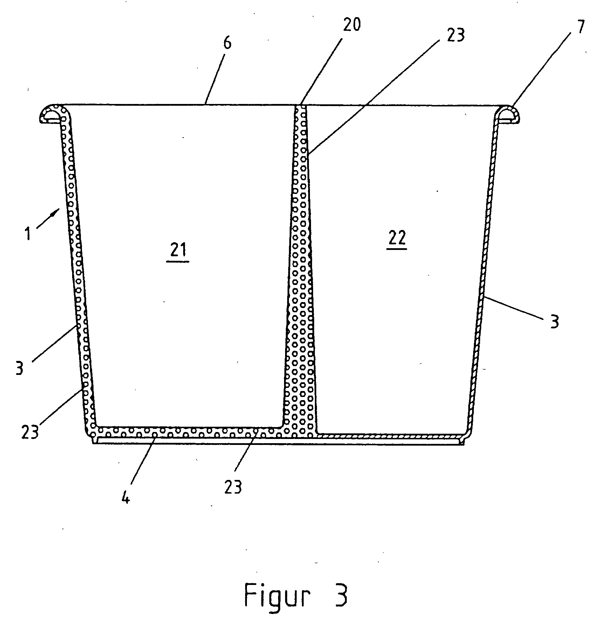

Fig. 3 zeigt ein weiteres Ausführungsbeispiel eines Putzeimers 1 mit vorzugsweise rechteckigem Umriß, dessen Innenraum durch eine Zwischenwand 20 in zwei Räume 21, 22 unterteilt ist. Beim gezeigten Ausführungsbeispiel dient der Raum 21 zur Aufnahme des frischen Wischwassers, während der Raum 22 zur Aufnahme des beispielsweise beim Auswringen des Putzlappens, Reinigungstuchs oder dergleichen anfallenden Schmutzwassers dient. Zu diesem Zweck kann am Öffnungsrand 6 des Putzeimers 1 im Bereich des Schmutzwasserraums 22 in bekannter Weise eine Wringeinrichtung fixiert sein.

Zumindest die den Wischwasserraum 21 begrenzenden Wände, nämlich die Wandung 3, der Boden 4 und die Zwischenwand 20 sind thermisch isolierend ausgebildet, beispielsweise zweischalig mit einer Kunststoff-Ausschäumung 23. Selbverständlich können die Wandung 3 und der Boden 4 auch in dem den Schmutzwasserraum bildenden Bereich in gleicher Weise isolierend ausgebildet sein. Beim gezeigten Ausführungsbeispiel sind sie jedoch einschichtig hergestellt und weisen beispielsweise gleiche Wandstärke auf wie die die Wandung 3, der Boden 4 und die Trennwand 20 im Bereich des Wischwasserraums bildenden Schalen.

Bei sämtlichen Ausführungsformen kann ferner ein thermisch isolierender Deckel vorgesehen sein, der am Öffnungsrand, ggf. selbstöffnend, gelagert ist und die Oberfläche des Wischwassers gegen direkte Wärmeabstrahlung abdeckt.

## Patentansprüche

1. Putzeimer aus Kunststoff für Wischwasser, mit einem Boden (4), einer im wesentlichen aufrechten Wandung (3) und einem im Bereich des Öffnungsrandes (6) gelagerten Tragbügel (9), wobei wenigstens die Wandung (3) zumindest auf dem größten Teil der Höhe des Putzeimers (3) thermisch isolierend ausgebildet ist, **dadurch gekennzeichnet, daß** die Wandung (3) innenseitig und/oder außenseitig mit einer Schicht (18) aus einem Kunststoff-Integralschaum versehen ist oder aus einem Kunststoff-Integralschaum besteht, wobei der Kunststoff-Integralschaum an seiner freien Oberfläche eine oberflächig geschlossene, wasserdichte Haut aufweist.

2. Putzeimer nach Anspruch 1, **dadurch gekennzeichnet, daß** der Boden (4) thermisch isolierend ausgebildet ist, wobei er innenseitig und/oder außenseitig mit einer Schicht (18) aus einem Kunststoff-Integralschaum versehen ist oder aus einem Kunststoff-Integralschaum besteht, wobei der Kunststoff-Integralschaum an seiner freien Oberfläche eine oberflächig geschlossene, wasserdichte Haut aufweist.

3. Putzeimer nach Anspruch 1 oder 2, **gekennzeichnet durch** einen die Oberfläche des Kunststoffschaums an der Innenseite des Putzeimers (1) abdeckenden und an dessen Öffnungsrand (6) fixierten Folienbeutel.

4. Putzeimer nach einem der Ansprüche 1 bis 3, **dadurch gekennzeichnet, daß** der Innenraum des Putzeimers durch eine Zwischenwand (20) in zwei Räume - einen Wischwasserraum (21) und einem Schmutzwasserraum (22) - unterteilt ist.

5. Putzeimer nach Anspruch 4, **dadurch gekennzeichnet, daß** nur die den Wischwasserraum (21) begrenzende Wandung (3), die Trennwand (20) und ggf. der Boden (4) nach einem der Ansprüche 1 oder 2 thermisch isolierend ausgebildet ist.

6. Putzeimer nach einem der Ansprüche 1 bis 5, **dadurch gekennzeichnet, daß** ein die freie Oberfläche des Wischwassers abdeckender, thermisch isolierter Deckel vorgesehen ist.

## Claims

1. Cleaning bucket of plastic material for cleaning water, comprising a bottom (4), a substantially vertical wall (3) and a carrying handle (9) disposed in the region of the opening edge (6), wherein at least the wall (3) is thermally insulating at least through most of the height of the cleaning bucket, **characterized in that** the wall (3) is provided, on the inner and/or outer side, with a layer (18) of an integral plastic foam or consists of an integral plastic foam, wherein the free surface of the integral plastic foam has a water-proof skin with closed surface.

2. Cleaning bucket according to claim 1, **characterized in that** the bottom (4) is thermally insulating, wherein its inner and/or outer sides are provided with a layer (18) of integral plastic foam or consist of an integral plastic foam, wherein the free surface of the plastic integral foam has a water-proof skin with closed surface.

3. Cleaning bucket according to claim 1 or 2, **characterized by** a foil bag which covers the surface of the plastic foam on the inner side of the cleaning bucket (1) and is fixed to its opening edge (6).

4. Cleaning bucket according to any one of the claims 1 through 3, **characterized in that** the inner space of the cleaning bucket is divided into two chambers by an intermediate wall (20) - a cleaning water chamber (21) and a dirty water chamber (22).

5. Cleaning bucket according to claim 4, **characterized in that** only the wall (3) which delimits the cleaning water chamber (21) and optionally the bottom (4) are thermally insulating in accordance with one of the claims 1 or 2.

6. Cleaning bucket according to any one of the claims 1 through 5, **characterized in that** a thermally insulated lid is provided which covers the free surface of the cleaning water.

## Revendications

1. Seau de nettoyage en matière plastique pour eau de nettoyage, comportant un fond (4), une paroi (3) sensiblement verticale et une anse (9) montée dans la zone du bord d'ouverture (6), dans lequel au moins la paroi (3) est conformée thermiquement isolante sur la majeure partie de la hauteur du seau de nettoyage (1), **caractérisé en ce que** la paroi (3) est revêtue à l'intérieur et/ou à l'extérieur d'une couche (18) de mousse structurée synthétique ou est constituée d'une mousse structurée synthétique, la mousse structurée synthétique présentant à sa surface libre une peau fermée en surface et étanche à l'eau.

2. Seau de nettoyage selon la revendication 1, **caractérisé en ce que** le fond (4) est conformé thermiquement isolant, étant ainsi revêtu à l'intérieur et/ou à l'extérieur d'une couche (18) de mousse structurée synthétique ou constitué d'une mousse structurée synthétique, la mousse structurée synthétique présentant à sa surface libre une peau fermée en surface et étanche à l'eau.

3. Seau de nettoyage selon la revendication 1 ou 2, **caractérisé par** un sac en film plastique couvrant la surface de la mousse synthétique sur la face intérieure du seau de nettoyage (1) et fixé sur le bord d'ouverture (6) de celui-ci.

4. Seau de nettoyage selon l'une quelconque des revendications 1 à 3, **caractérisé en ce que** l'espace intérieur du seau de nettoyage est divisé par une cloison (20) en deux compartiments, l'un pour l'eau de nettoyage (21) et l'autre pour l'eau sale (22).

5. Seau de nettoyage selon la revendication 4, **caractérisé en ce que** seuls la paroi (3) délimitant le compartiment d'eau de nettoyage (21), la paroi de séparation (20) et le cas échéant le fond (4) sont conformés thermiquement isolants selon l'une des revendications 1 ou 2.

6. Seau de nettoyage selon l'une quelconque des revendications 1 à 5, **caractérisé en ce que** l'on prévoit un couvercle thermiquement isolant couvrant la surface libre de l'eau de nettoyage.
